Europäisches Patentamt

European Patent Office

Office européen des brevets

(11) Publication number: **0 214 764**
**A2**

(12) **EUROPEAN PATENT APPLICATION**

(21) Application number: **86306119.8**

(22) Date of filing: **07.08.86**

(51) Int. Cl.⁴: **B 01 J 47/02**
**C 13 K 1/04**

(30) Priority: **08.08.85 GB 8519954**

(43) Date of publication of application:
**18.03.87 Bulletin 87/12**

(84) Designated Contracting States:
**AT BE CH DE FR GB IT LI LU NL SE**

(71) Applicant: **DOW CHEMICAL BELGIUM N.V.**
**Hilton Tower - 24th Floor Boulevard de Waterloo 38**
**B-1000 Brussels (BE)**

(72) Inventor: **Otte, Joseph Nicolas Alfons**
**4 Drusbergstrasse**
**CH-8820 Wädenswil (CH)**

(74) Representative: **Raynor, John et al**
**W.H. Beck, Greener & Co 7 Stone Buildings Lincoln's Inn**
**London WC2A 3SZ (GB)**

(54) Method and apparatus for ion exchange applications.

(57) An apparatus for conducting ion exchange operations comprises a vessel having an internal cylindrical element extending the length of the vessel. The interior of this inner cylindrical element defines a volume for containing an ion exchange resin. The outer surface of the inner cylindrical element and the inner surface of the vessel walls define an annular volume for containing an ion exchange resin which cylindrical volume.

**Description**

METHOD AND APPARATUS FOR ION EXCHANGE APPLICATIONS

The present invention relates to an apparatus useful in conducting ion exchange operations and to ion exchange operations conducted using the apparatus.

In the purification of water and other liquids, the liquid being purified is often contacted with an ion exchange resin to remove the undesirable ionic components from the liquid. Conventionally, this treatment is conducted by continuously passing the ion containing liquid through one or more tanks or columns containing the ion exchange resin. This step is often referred to as the "loading" cycle. Loading is generally continued until exhaustion of the resin, e.g., the reduction in the capacity of the resin bed to a commercially impractical level which is evidenced by the treated liquid containing an undesirable amount of ions or ions of an undesirable nature. The exhausted resin is subsequently regenerated to restore its ion exchange capabilities. In many cases, the exhausted resin is backwashed prior to its regeneration to remove dirt or small (i.e., broken) resin particles from the column and to reduce the chanelling which may be caused during the loading cycle.

In general, regeneration is conducted by contacting the exhausted resin with a liquid regenerant which displaces the ions on the exhausted resin with an ion which converts the resin to an active form. For example, a strong acid, cation exchange resin is conventionally regenerated using a dilute acid solution to replace any cations on the resin (e.g., $Na+$ or $Ca++$) with $H+$. Alternatively, a strong base, anion exchange resin is often regenerated using a weak caustic solution to replace the anions (e.g., $SO_4-$) with $OH-$.

In ion exchange operations, it is most advantageous if the resin bed remains packed during both the loading and the regeneration steps. Therefore, for the sake of simplicity, the loading cycle is often conducted by passing the ion containing liquid downwardly through the vessel containing the resin. Similarly, upon exhaustion, the regenerant is passed downwardly through the exhausted resin bed.

Upon exhaustion, the percent of resin which is exhausted varies throughout the treatment vessel or at least a portion thereof. Specifically, the resin which is initially contacted with the ion containing liquid is more exhausted than the resin subsequently contacted by the ion containing liquid. For example, in an operation in which the liquid being treated is flowed downwardly through the vessel containing the ion exchange resin, upon exhaustion of the resin, the vessel contains a top layer of resin which is essentially completely exhausted with the resin becoming progressively less exhausted from this layer to the bottom of the vessel where the resin is substantially new. This effect is commonly referred to as "layering" of the resin bed.

To optimize the efficiency of the regeneration operation and to maintain the best possible quality of the treated liquid, it is desirable to regenerate the exhausted ion exchange resin, while it remains in this layered state, by passing the regenerant liquid through the bed such that the least exhausted resin is initially contacted with the regenerant. Therefore, it is most advantageous to regenerate the exhausted resin by passing the regenerant in the opposite direction to the flow of liquid during loading.

One such method involves loading the resin by passing the contaminated liquid upwardly through the ion exchange resin bed and subsequently passing the regenerant liquid downwardly through the bed to regenerate the exhausted ion exchange resin. Unfortunately, to maintain the bed in a compacted state during the loading cycle requires a relatively high liquid flow rate. In addition, backwashing of the exhausted resin without destroying the layered structure of the resin bed is precluded.

In addition, due to the inherent limitations of the described method, its uses are limited, particularly in operations in which two or more resins are contained within a single treatment vessel. For example, it is often desirable to employ a combination of weak base and strong base resins in the purification of water containing high concentrations of chloride or sulfate ions. In this operation, the contaminated liquid advantageously passes initially through a layer of the weak base resin and subsequently through a layer of the strong base resin. Using a single treatment vessel, the vessel will generally comprise a layer of the weak base resin which conventionally is a less dense and coarser material positioned over a layer of the strong base resin which is a more dense but finer material. Due to these differences in size and density, it is not possible to place the strong base resin over the weak base resin to allow an upflow loading cycle and a downflow loading cycle is mandated. Therefore, the described techniques of ion exchange which require an upflow loading cycle cannot suitably be employed without using two vessels (one for each of the weak base resin and the strong base resin) or a column which mechanically seperates the weak base and strong base resins. Unfortunately, this increases the expense of installation and operation.

An alternative method for conducting ion exchange comprises flowing the contaminated liquid downwardly through the ion exchange resin bed and subsequently regenerating the exhausted resin by flowing the liquid regenerant upwardly through the column. Although the described method is suitably employed in operations having a layer of a weak base resin positioned over a layer of a strong base resin or similar type operations, the applicability of the method is still limited due to inherent constraints in the loading and regeneration cycle. In addition, for effective regeneration, methods of packing the exhausted ion exchange resin and maintaining the resin in this packed state during regeneration are often inefficient or require substantial expenditure of capital.

In view of the deficiencies in the prior art methods for conducting ion exchange operations, it would be highly desirable to provide an apparatus and method which do not exhibit the foregoing deficiencies.

Accordingly, the present invention is such an apparatus and method for conducting ion exchange operations. The apparatus of the present invention comprises a vessel having an inlet and outlet for liquid characterized in that the vessel further comprises an internal cylindrical element extending lengthwise through the vessel. The interior of this inner cylindrical element defines a volume for containing an ion exchange resin. The outer surface of the inner cylindrical element and the inner surface of the vessel walls define an annular volume for containing an ion exchange resin which may be that same or different than that resin contained by the inner cylindrical volume.

As subsequently described in more detail hereinafter, the apparatus of the present invention can effectively be employed in a wide variety of ion exchange applications with superior performance as compared to the normal vessels or columns conventionally employed in conducting ion exchange operations. For example, the described apparatus is effectively employed in simulating a resin bed comprising separate and distinct layers of two resin types (e.g., weak and strong base resins or anion and cation exchange resins) while providing complete seperation between the two resin types without the necessity of the two resins exhibiting a difference in size and/or density.

Moreover, the described apparatus provides the user with maximum flexibility in conducting ion exchange operations. Specifically, the ion exchange resin contained in the outer annular volume and volume defined by the inner cylinder can be loaded by flowing the ion containing liquid in the same or different directions (i.e., upwardly or downwardly), depending on the ion exchange operation being conducted, through the outer and the inner volumes. Similarily, regeneration can be conducted using either cocurrent or countercurrent regeneration techniques in either or both the outer annular and inner cylindrical volumes. A further advantage of the apparatus is that regeneration of two different type resins, one contained in the inner cylindrical volume and the other in the outer annular volume, can effectively be conducted without the need of an additional step to physically separate the resin bed into the different types of resins following exhaustion.

In addition, two or more apparatus of the present invention can be employed in series to effect an ion exchange operation. For example, in a preferred embodiment of the present invention, a series of two of the described ring bed vessels, both containing a strong acid resin in the outer annular volume and a strong base resin in the inner cylindrical volume, can be employed in a continuous condensate polishing operation. As another example of a preferred embodiment of the present invention, a series of two vessels - the first containing a strong acid resin in both the outer annular and the inner cylindrical volumes and the second vessel containing a weak base resin in the outer annular volume and a weak acid or weak base resin in the inner cylinder - can usefully be employed prior to the isomerization step in the production of high fructose corn syrup (HFCS). Using a series of two vessels, downtime or the need for additional vessels to regenerant the exhausted resins can be eliminated.

Understanding of the invention will be facilitated by referring to the accompanying drawings, in which:

Fig. 1 is a schematic representation, partly in cross-section, illustrating one embodiment of the present invention;

Figs. 2 is a schematic flow sheet illustrating a method for operating the appartus of Fig. 1;

Fig. 3(a) and 3(b) are schematic flow sheets illustrating alternative methods for operating the apparatus of the present invention:

Figs. 4(a) and (b) are schematic flow sheets of a method for the preparation of high fructose corn syrup using two vessels of the present invention connected in series; and

Fig. 5 is a schematic flow sheet of a condensate polishing operation which employs two vessels of the present invention connected in series.

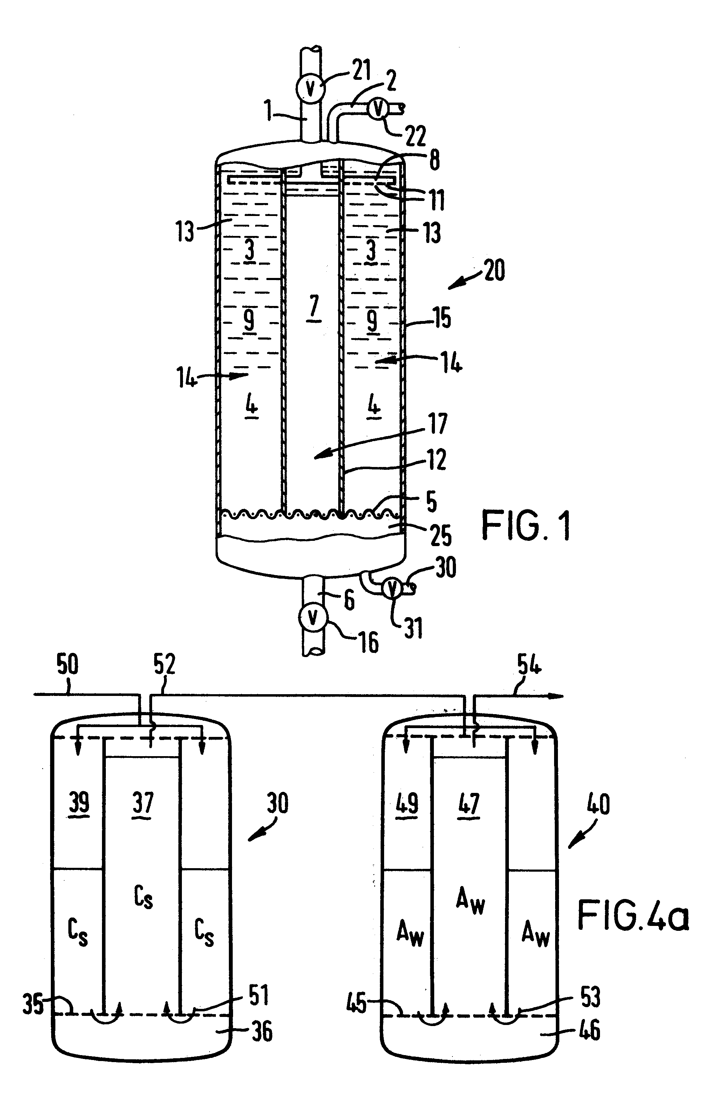

Referring now more particularly to the drawings, Fig. 1 depicts a tank, vessel or column 20 having an inner cylindrical element 12 defining volume 7 (herein referred to as the "inner cylindrical volume"). In the depicted embodiment, inner cylindrical volume 7 contains an ion exchange resin 17. An annular volume 9 (herin referred to as the "outer annular volume") is formed by the outer surface of the inner cylinder 12 and the inner surface of the walls 15 of vessel 20. The inner cylinder and outer walls of the vessel are designed such that the inner cylindrical volume and outer annular volume are of desired size for the specific operation being conducted in the ring bed vessel. In the depicted embodiment, the outer annular volume 9 contains an ion exchange resin 14 which can be the same or different than the ion exchange resin in volume 7. Although the amounts of resin in volumes 7 and 9 depend on the specific ion exchange operation being conducted, in the depicted embodiment, the outer annular volume contains a relatively large free volume to allow backwashing of the resin contained in the annular volume 9 whereas the resin fills essentially the entire inner cylindrical volume 7.

The vessel 20 further comprises a conduit 1 (having a valve 21) which is in fluid communication with a distributor 8. In the depicted embodiment, the distributor 8 has a plurality of outlet ports 11 for distributing the liquid over the outer annular volume 9. Alternatively, the distributor can easily be modified to flow liquid into the inner cylindrical volume 7 or into both the inner cylindrical and outer annular volumes 7 and 17. Vessel 20 further comprises a conduit 2 having a valve 22 which, in the depicted embodiment, is fluid communication with the volume 7 defined by the inner cylinder 12. Conduit 2 can also be easily be modified to be in fluid communication with volume 9 only or both volumes 7 and 9. Conduit 6 having valve 16 is depicted as being in fluid communication with both the inner cylindrical volume 7 and the outer annular volume 9. Similarly, the conduit 6 can be in fluid communication with only volume 7 or volume 9. A conduit 30 having a valve 31 is also placed at the bottom of the vessel 20 and can be constructed so as to be in fluid communication with the inner volume 7 and/or the outer volume 9. A screen or baffle 5 having a plurality of openings of a size which allow the passage of fluids but not the passage of the particulate ion exchange resins is provided above fluid conduit 6. A similar screen or baffle (not shown) is typically placed at the upper end of either or both volumes 7 and/or 9. Although not depicted in Fig. 1, an inert material such as inert plastic beads can optionally be placed at the top of inner cylindrical volume 7 and/or outer annular volume 14.

In the use of the ring bed vessel for ion exchange operations, the actual method for loading the ion exchange resin and regenerating the exhausted ion exchange resin is dependent on the specific ion exchange operation being conducted. Among the variety of techniques for conducting an ion exchange operation using the ring bed apparatus, one preferred method, particularly that as depicted in Fig. 1, comprises flowing the ion containing liquid downwardly through the resin contained in the outer annular volume of the vessel and subsequently flowing the liquid upwardly through the resin contained by the inner cylindrical volume and then from the vessel.

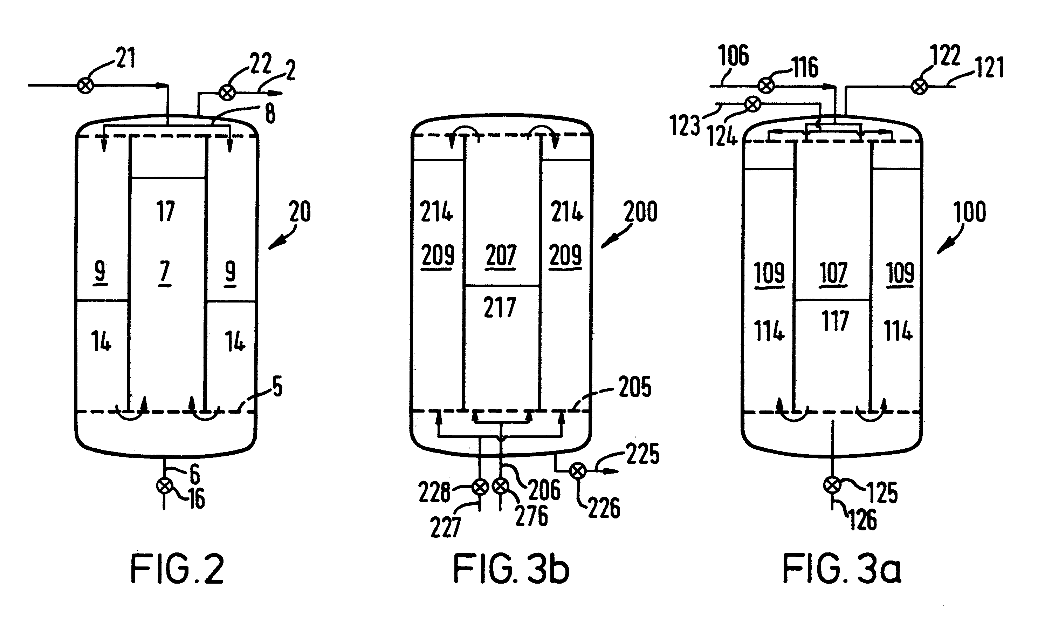

Specifically, as depicted in Fig. 2 which schematically illustrates the vessel during the loading cycle, the contaminated liquid is flowed from inlet 1 through distributor 8 into the outer annular volume 9. The contaminated liquid flows through the ion exchange resin 14 contained in the outer annular volume 9 where the undesirable ions are removed from solution. The contaminated liquid exits from volume 9 through screen 5. Upon exiting from annular volume 9, the partially treated liquid is then flowed upwardly through the ion exchange resin 17 contained in the inner cylindrical volume 7. As the liquid flows through the ion exchange resin contained by volume 7, any remaining ion of an undesirable nature are removed from solution. Upon exiting from inner cylindrical volume 7, the liquid flows from the column through conduit 2. In the described loading operation, valves 21 and 22 are open, at least partially, and valve 16 closed.

The described operation is particularly usefully employed when the inner cylindrical volume 7 and outer annular volume 9 contain the same resin or same type of resin (e.g., both volumes 7 and 9 contain a strong acid, cation exchange resin or a strong base, anion exchange resin).

Following the loading cycle, the exhausted resins in inner volume 7 and outer volume 9 can be regenerated using any of a variety of different techniques. For example, since the resin in the outer annular volume is completely exhausted, there is no need to maintain the layered structure of this resin and it can first be backwashed using fresh water prior to regeneration. Due to the fact that it is not completely exhausted, the resin in inner cylindrical volume 7 is not advantageously backwashed prior to regeneration. Following the backwashing of the resin in outer volume 9, the regenerant liquid can be flowed downwardly through both the resin contained in volume 9 and volume 7 and from the column through conduit 16. The flow of the regenerant is continued until the resins in both volumes 7 and 9 are completely regenerated.

In an alternative method for regenerating the resins, the regenerant liquid can first be flowed downwardly through the resin contained in inner cylindrical volume 7 and the partially spent regenerant flowed upwardly through the resin contained in the annular volume 9, thereby backwashing the resin contained in volume 9. The regenerant is then flowed from the column via conduit 22. Once the resin 17 is fully regenerated, the flow of regenerant liquid through inner cylindrical volume 7 is ceased. Subsequently, a fresh regenerant liquid is flowed from the distributor 8 downwardly through the resin 14 in annular volume 9 until this resin is fully regenerated. The liquid regenerant is then passed from volume 9 from the column through conduit 16.

The amounts of resin contained by the volumes 7 and 9 will vary depending on the specific ion exchange operation being conducted in the apparatus. In the described operation, the resin preferably fills from 75 to 100 percent of the inner cylindrical volume 7 (i.e., the volume 7 comprises from 0 to 25 percent void space) and from 25 to 100, more preferably from 40 to 75, percent of the outer annular volume 9. By filling a large percentage of the inner volume with resin, a lower liquid flow rate is required to press the resin against the screen or inert material which is placed at the top of the column.

The appartus of the present invention can be operated in a variety of alternative methods by simple modification to the vessel and/or the piping leading to and/or from the vessel. For example, the apparatus of the present invention can operate as depicted in Fig. 3(a) in which figure the ion containing liquid to be treated is initially passed, via line 106 having valve 116 downwardly through the ion exchange resin 117 contained in the inner cylindrical volume 107 of a vessel 100 and the partially treated liquid is subsequently flowed upwardly through the resin 114 contained in the outer annular volume 109.

Upon exhaustion of the resin in the vessel 100, since the resin in the inner volume 107 is completely exhausted it can optionally, but preferably, be backwashed by passing fresh water or other liquid, via line 126 having valve 125, upwardly through resin 117 and from column 100 via line 121 having valve 122. The liquid used to backwash the resin is flowed at a rate sufficient to remove the desired amounts of dirt particles, broken beads, percipitation and the like. To permit this backwashing, the inner cylindrical volume is less than completely filled with the resin 117. Due to the fact that it is not completely exhausted, the resin in outer annular volume 109 is not advantageously backwashed prior to regeneration. Subsequently, a regenerant liquid is flowed via line 123 downwardly through the resin contained in both the outer annular volume 109 and the inner cyclindrical volume 107. The flow of the regenerant is continued until the resins in both volumes 107 and 109 are completely regenerated.

In an alternative method for regenerating the resins, the regenerant liquid can first be flowed downwardly through the resin 114 contained in outer volume 109 and the partially spent regenerant flowed upwardly through the resin 117 contained in the inner volume 107, thereby backwashing the resin contained in volume 107. Once the resin 114 is fully regenerated, the flow of regenerant liquid is ceased. Subsequently, a fresh regenerant is flowed downwardly through the resin 117 contained by the inner volumer 107 until the resin is completely regenerated.

Although the amounts of resin in each of the volumes 107 and 109 will vary depending on the specific ion exchange operation being conducted in the vessel, the resin 117 advantageously fills from 25 to 85, preferably from 40 to 75, percent of the inner cylindrical volume 107. The resin 114 advantageously fills from 75 to 90 volume percent of the outer annular volume 109.

An alternative but generally less preferred method of operation is depicted in Fig. 3(b). In the depicted embodiment, the contaminated liquid is flowed into a vessel 200, via a line 206 having valve 216 such that the liquid first flows upwardly through an ion exchange resin 217 contained by an inner cylindrical volume 207, subsequently downwardly through an ion exchange resin 214 contained in an outer annular volume 209 and from vessel 200 via line 225 having valve 226.

Upon exhaustion of the resin in the vessel 200, the resin 217 in the inner cylindrical volume is optionally, but preferably, backwashed by flowing fresh water or other liquid up through the resin 217. Subsequent to the backwashing operation, the regenerant liquid is advantageously flowed via line 227, having valve 228, upwardly through the resin 214 contained in the outer annular volume 209. Thereafter, the partially spent regenerant liquid is flowed downwardly through the resin contained in the inner cylindrical volume 207. In the depicted embodiment, the inner volume 207 will generally comprise from 50 to 100 percent of resin, said volume being dependent, to some extent, on whether backwashing is desirable. To maintain the resin contained in the outer volume as a packed bed during the regeneration, the outer volume advantageously comprises a relatively low amount of free (or void) space (i.e., from 75 to 100 percent of the outer annular volume 209 is advantageously filled with the ion exchange resin).

The inner cylindrical and outer annular volumes can contain the same resin, two different ion exchange resins of the same ionic character or resins of different ionic character.

For example, the outer annular volume can contain a weak base (or weak acid) ion exchange resin and the inner cylindrical volume can contain a strong base (or strong acid) ion exchange resin, respectively. Since the weak base (or weak acid) resin is completely seperated from the strong base (or strong acid) resin, a layered bed is simulated without the need for a difference in density and/or particle size to achieve the total separation desired between the two resins of different ionic character.

Any of the techniques described with reference to Figs. 2 and 3(a) and 3(b) can be suitably employed in conducting ion exchange operations using two different resins of the same ionic character. A disadvantage in using the method depicted by Fig. 3(b) in conducting an ion exchange operation using different type resins is that any resin in the inner cylindrical volume which breaks during processing may be carried over into the resin contained in the outer annular volume, thereby cross-contaminating the resins. Specifically, any broken beads which occur in the resin (e.g., a weak or weak base resin) contained by the inner volume 207 will be carried over into the resin (e.g., a strong acid or strong base resin) contained in the outer volume 209 by the liquid being treated.

In general, the more preferred methods of operation using two resins of different ionic character are those methods depicted in Figs. 2 and 3(a). For example, in the method of operation depicted in Fig. 3(a), the contaminated liquid is flowed into the vessel 100, via the line 106 in a manner such that the liquid first flows downwardly through the ion exchange resin 117 (e.g., a weak acid or weak base resin) contained by the inner cylindrical volume 107 and subsequently flows upwardly through the ion exchange resin 114 (e.g., a strong acid or strong base resin) contained in the outer annular volume 109.

An important feature of the described method of operation is that any broken beads which are generated in the inner volume do not enter the outer volume since the flow of the liquid, during loading, is downward through the resin 117 contained by volume 107 and broken resin beads tend to rise. In addition, any broken beads in the outer volume do not enter the inner volume due to the fact that the liquid flowing from volume 109 flows. In this manner, problems of cross-pollution between the two ion exchange resins contained by the vessel are effectively eliminated. Similarly, the method of operation depicted in Fig. 2 effectively eliminates the problems of cross-pollution in a similar manner.

When employing the described ring bed apparatus with ion exchange resins of different ionic character (e.g., a cation and anion exchange resin), the cation exchange resin can be contained by either the outer annular volume or inner cylindrical volume and the anion exchange resin contained by the other of the volumes.

Any of the methods described with reference to Figs 2, 3(a) or 3(b) can be employed in conducting the ion exchange operation using two resins of different ionic character, with the methods of operation depicted by Figs. 2 and 3(a) again generally being preferred. In general, it is preferable that the liquid being treated initially contact the strong acid, cation exchange resin and thereafter contact the partially treated liquid with the strong base, anion exchange resin. The different ion exchange resins are placed in the ring bed apparatus accordingly. For example, in the ring bed apparatus of Fig. 2 the cation resin, preferably a strong acid, cation exchange resin, is advantageously placed in the annular volume and the anion exchange resin, preferably a strong base, anion exchange resin, placed in the inner cylindrical volume. This configuration is particularly useful in operations such as water dimineralization and condensate polishing. Upon exhaustion, the exhausted resins are easily regenerated by flowing a regenerant liquid for the strong acid resin through the strong acid resin and flowing a regenerant liquid for the strong base resin through the anion exchange resin. The cation resin is preferably backwashed with fresh rinse water prior to this regeneration step. The liquid regenerants leaving the annular volume and inner cylindrical volume are mixed and exit the column.

In general, a strong acid resin is commonly regenerated by displacing cations abstracted from solution by the resin with a hydrogen ion using a dilute acid solution such as a dilute solution of hydrochloric acid as the regenerant. An anion exchange resin is commonly regenerated by displacing anions abstracted from solution by the resin with a hydroxide ion using a dilute solution of a base such as sodium hydroxide. Since the hydrogen and hydroxide ion are retained by the cation and anion resins respectively, the liquid exiting from the column is a salt solution, commonly a solution of sodium chloride.

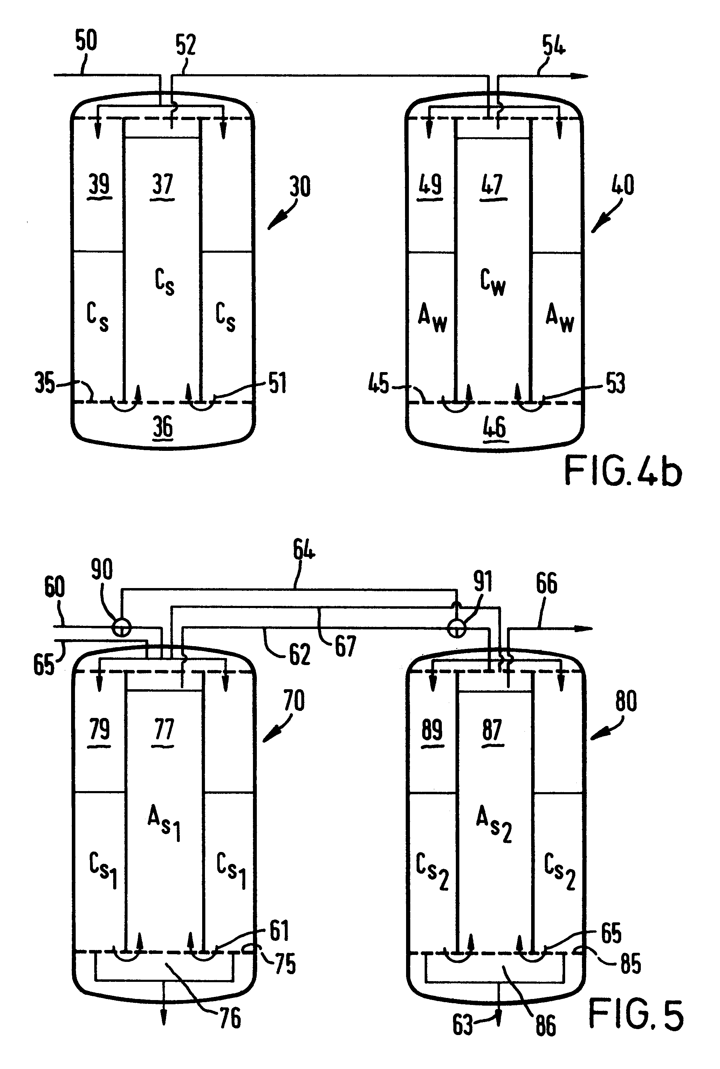

Ion exchange operations are also advantageously conducted using two or more apparatus of the present invention in series. For example, as depicted in the alternate embodiments illustrated in Figs. 4(a) and 4(b), a series of two vessels can be employed for purposes of purifying the glucosic containing stream prior to isomerization of the glucose in the production of high fructose corn syrup (HFCS).

Specifically, in the production of HFCS, a glucose containing stream is deashed and decolorized prior to the actual enzyme isomerization of the glucose to a glucose/fructose mixture. Conventionally, deashing (specifically the removal of sulphate and chloride salts of calcium, magnesium and potasium) and decolorizing is achieved by sequentially treating the glucosic stream with a strong acid, cation exchange resin and subsequently with a weak base, anion exchange resin. The strong acid resin removes the cationic species such as calcium, magnesium and potasium cations from the glucosic stream. The weak base resin removes the chloride and sulphate anions from the glucosic stream. In addition, the anion exchange resin removes significant amounts of the color bodies.

Although each of the vessels containing the ion exchange resin can be operated using any of the methods described with reference to Figs. 2, 3(a) or 3(b), in a preferred embodiment such as illustrated in Fig. 4(a), the method depicted in Fig. 2 is most preferred. Specifically, the glucose containing stream is discharged from an inlet conduit 50 into the inner cylindrical volume 37 of a column 30. The inner cylindrical volume 37 as well as the outer annular volume 39 are filled, at least partially, with a strong acid, cation exchange resin ($C_s$). As the liquid passes sequentially downwardly through the cation exchange resin contained by volume 39 and then upwardly through the cation exchange resin in volume 37, cations are removed. The flow of the liquid through the cation exchange resin in volume 39 through space 36 and upwardly through the resin contained by volume 37 is depicted by the arrows numbered 51 in Fig. 4 (a).

The liquid is then flowed, via line 52, from the vessel 30 into a vessel 40. Both the outer annular volume 49 and the inner cylindrical volume 47 of vessel 40 which contains a weak base, anion exchange resin (designated as $A_w$) in both the outer volume 49 and the inner volume 47. The glucosic stream flows downwardly through the weak base resin contained in the outer volume 47 and subsequently upwardly through the resin contained by inner volume 49. The flow of the glucose containing liquid from the annular volume 49 through screen 45 and space 46 to the inner volume 47 is depicted by the arrows numbered 53 in Fig. 4(a). As the glucose containing liquid flows through the weak base resin, anions and color bodies are removed from the liquid. The liquid flows from vessel 40 via line 54. The thus treated glucose containing liquid in line designated 54 is now ready for further processing including the isomerization of the glucose to fructose.

The operation depicted by Fig. 4(b) is similar except that the second ring bed vessel 40 contains a weak acid, cation exchange resin ($C_w$) in the inner cylindrical volume 47. In the depicted operation, the glucose containing liquid is initially passed through the strong acid, cation exchange resin contained in the outer cylindrical volume 37 of the vessel 30 and subsequently, the partially treated liquid is passed upwardly through strong acid resin contained in the outer annular volume 39. The glucose containing liquid is then flowed from the first vessel 30, via line 52, into second vessel 40. As depicted in the embodiment illustrated in Fig. 4(b), the partially treated glucose containing liquid is then advantageously passed downwardly through the weak base anion exchange resin contained in the outer annular volume 49 of vessel 40 in which the anionic impurities are removed. Subsequently, the treated liquid is passed upwardly through the weak acid, cation exchange resin contained in the inner cylindrical volume 47.

By passing the glucose containing liquid through the weak acid resin prior to isomerization, but subsequent to the sequential treatment with a strong acid and anion resins, the glucose containing stream is imparted with a desirable pH for subsequent isomerization. Moreover, it is unnecessary to thoroughly and completely rinse the ammonium, sodium or other anion which have become entrapped or entrained in the anion resin during regeneration of the exhausted resin. Specifically, the entrapped or entrained sodium or ammonium remaining in the resin following regeneration and rinsing will be rinsed from the anion resin by the glucosic process stream. This rinsed sodium or ammonium will subsequently be removed from the process stream prior to enzyme isomerization by the weak acid resin contained in the inner cylindrical volume 47.

Both the cation exchange resin contained in vessel 30 and the weak base resin contained in vessel 40 can be regenerated using the techniques as described hereinbefore. As mentioned, the resins contained in the annular volumes 39 and 49 can be backwashed without removal to a separate vessel. This ease in backwashing is not possible with existing systems.

The method and apparatus of the present invention are also advantageously employed in a condensate polishing operation which is often a portion of a power production facility such as a steam generating plant. One method of particular interest for use in condensate polishing operation using the ring bed vessels of the present invention as depicted in Fig. 5. Although Fig. 5 illustrates only one preferred method of operation for each of the ring bed vessels employed, each of the vessels can be operated using any of the methods of operation described with reference to Figs. 2, 3(a) or 3(b). Preferably, the methods of operation described with reference to Figs. 2 or 3(a) are employed with the methods of Fig. 2 being illustrated in Fig. 5 and being most preferred. In the embodiment depicted in Fig. 5, condensate is discharged from a condensate inlet line 60 into an outer annular volume 79 of vessel 70. The annular volume 79 contains a strong acid, cation exchange resin designated $C_{s1}$. In normal operation, the condensate flows through the strong acid resin contained in the annular volume 79 and then, as indicated by the arrow designated 61, through a resin impermeable liquid permeable screen 75 and volume 76 into the inner cylindrical volume 77. The inner volume 77 contains a strong base, anion exchange resin, designated as $A_{s1}$. The partially treated liquid flows upwardly through the strong base resin. The thus treated liquid exits from the inner cylindrical volume 77 and vessel 70 through line 62 and is fed into an outer annular volume 89 of a second vessel 80. The annular volume 89 contains a strong acid, cation exchange resin designated as $A_{s2}$. The partially treated liquid flows from the outer volume 87, through the screen 85, and then from the vessel 80 by means of line 63. The thus treated, alkaline metal free condensate is suitable for recycling to the steam generating operation (not shown).

Upon the exhaustion of the strong acid and strong base resins contained by vessel 70 (the strong acid resin contained by vessel 70 being exhausted prior to the strong acid resin contained by vessel 80 and vessel 70 being designed such that, in normal operations, the strong base and strong acid resins become exhausted at approxiamately the same time), the condensate is diverted from entry into vessel 70 into the annular volume 89 of column 80 by two valves 90 and 91 and conduit 60 and 64. The cationic impurities are removed from the condensate by the partially exhausted strong acid resin in volume 89 of vessel 80. The partially treated condensate exits from outer annular volume 89, through the liquid permeable, resin impermeable screen 85 and flows, as indicated by the arrows designated by numeral 65, into the inner cylindrical volume 87. The liquid flows upwardly through the inner volume 87 which contains a strong base resin. In this operation, conduit 63 is closed by a suitable valve (not shown). As the condensate passes through the strong base resin, the anions in solution are exchanged for the anions, typically hydroxide on the anion exchange resin. The ionic free condensate is removed from column 80 through conduit 66. Following subsequent treatment of the liquid with a strong acid, cation exchange resin, the purified condensate is capable of being recycled to the steam generating operation. Alternatively, rather than recycling the condensate directly to the steam generating plant, it is possible to pass the condensate through a small vessel containing a strong acid cation exchange resin which vessel is brought into service only when one or the other two main vessels 70 or 80 is being regenerated or is otherwise out of service.

The exhausted resins in vessel 70 are regenerated by the techniques hereinbefore described. For example, the strong acid resin, optionally, following backwashing, is regenerated using a dilute solution of hydrochloric acid flowing downwardly through the resin in a manner such that any cations on the resin are displaced by H+. The strong base resin is regenerated by passing a dilute solution of caustic downwardly through the resin, thereby displacing the anions on the resin with OH-. The resulting liquid leaving the column containing the resins being regenerated is a dilute salt solution.

After regenerating the strong acid and strong base resins in vessel 70, the condensate continues to be sequentially flowed through the strong acid resin and strong base resin contained by vessel 80. From vessel 80, the partially treated condensate is then flowed, via means of line 67, to vessel 70 now containing the regenerated strong acid and strong base resins. The condensate is then flowed through the newly regenerated strong cation resin in the annular volume 79 and from vessel 70 via line 68. Upon the exhaustion of the strong acid and/or strong base resins contained in vessel 80, the flow of condensate to vessel 80 is stopped and the two resins are regenerated. During this regeneration, the condensate is flowed downwardly through the strong cation resin in the annular volume 79 and then upwardly through the strong base resin contained in the inner cylinder volume 77 of vessel 70. The thus treated condensate which can optionally be subsequently treated with a strong acid, cation exchange resin, is ready for recycling to the steam generating plant. Upon complete regeneration of both the resins contained in vessel 80, the described loading/regeneration cycle is repeated.

Using the described ring bed apparatus, the condensate polishing operation is significantly improved as compared to conventional condensate polishing operations wherein, in one conventional method, the condensate is passed first through a vessel containing a strong acid cation exchange resin and then through a second vessel containing a mixed resin bed i.e., a resin bed containing a mixture of both a strong acid cation exchange resin. Specifically, when a resin bed of mixed cation and anion resins is employed, the two type resins must be seperated prior to regeneration. This involves considerable time and expense. In a second conventional method for condensate polishing, the condensate is treated using three vessels with the condensate being first passed through a vessel containing a strong acid resin, then through a second vessel containing a strong base resin and finally through a third vessel containing a strong acid resin. In this system, when either strong base resin requires regeneration, the ion exchange loading operation must either be interrupted or a fourth vessel containing a strong base resin employed in the loading operation. Alternatively, using the described ring bed apparatus, only two vessels are employed (with the exception of an optionally employed third vessel containing a strong acid resin for use during regeneration of the resins contained in either of the ring bed vessels during operation) for both the cycling or loading and regeneration operations.

## Claims

1. Apparatus for conducting ion exchange operations, the apparatus comprising a vessel for containing ion exchange resins and having an inlet and outlet for liquids, the vessel being characterized in that the vessel has an internal cylindrical element extending lengthwise through the vessel with the interior of this inner cylindrical element defining a volume for containing an ion exchange resin and the outer surface of the inner cylindrical element and the inner surface of the vessel walls defining an annular volume for containing an ion exchange resin which may be that same or different than that resin contained by the inner cylindrical volume.

2. A method of conducting an ion exchange operation, which method comprises using the passing on ion-containing liquid to be treated downwardly through a resin contained in the outer annular volume of apparatus as claimed in claim 1, and subsequently causing the partially treated liquid to flow upwardly through a resin contained by the inner cylindrical volume and then from the vessel.

3. A method of conducting an ion exchange operation which method comprises passing an ion-containing liquid to be treated downwardly through a resin contained within the inner cylindrical volume, of apparatus as claimed in claim 1, and subsequently causing the partially treated liquid to flow upwardly through a resin contained in the outer annular volume and then from the vessel.

4. A method as claimed in claim 2 or claim 3 wherein regeneration of both the ion exchange resins contained by the outer annular and inner cylindrical volumes is conducted using a countercurrent regeneration technique.

5. A method as claimed in any one of claims 2 to 4, wherein the ion exchange resins contained by the inner cylindrical and outer annular volumes are the same.

6. A method as claimed in any one of claims 2 to 4, wherein the ion exchange resins contained by the inner cylindrical and outer annular volumes are different but of the same ionic character.

7. A method of conducting an ion exchange operation which method comprises passing on ion-containing liquid through two or more vessels as defined in claim 1 in series

8. A method as claimed in claim 7, wherein the ion exchange operation comprises purifying a glucose containing stream prior to isomerization of the glucose contained in the stream in the preparation of high fructose corn syrup and the first vessel contains a strong acid resin in both the outer annular and the inner cylindrical volumes and the second vessel contains a weak base resin in both the outer annular and inner cylindrical volumes.

9. A method as claimed in claim 7, wherein the ion exchange operation comprises purifying a glucose-containing stream prior to isomerization of the glucose contained in the stream in the preparation of high fructose corn syrup and the first vessel contains a strong acid resin in both the outer annular and the inner cylindrical volumes and the second vessel contains a weak base resin in the outer annular volume and a weak acid resin in the inner cylindrical volume.

10. A method as claimed in claim 7, wherein the ion exchange operation is a condensate polishing operation and the two vessels both contain a strong acid resin in the outer annular volume and a strong base resin in the inner cylindrical volume.

FIG. 1

FIG.4a

FIG.2  FIG.3b  FIG.3a

FIG.4b

FIG.5